# EUROPÄISCHE PATENTSCHRIFT

(11) **EP 3 501 877 B1**
(45) Veröffentlichungstag und Bekanntmachung des Hinweises auf die Patenterteilung: **07.04.2021**
(21) Anmeldenummer: 18209361.7
(22) Anmeldetag: 30.11.2018
(51) Int. Cl.: B60L 5/20

(54) **KONTAKTEINHEIT UND VERFAHREN**
CONTACT UNIT AND METHOD
UNITÉ DE CONTACT ET PROCÉDÉ

(30) Priorität: 20.12.2017 DE 102017223401
(43) Veröffentlichungstag der Anmeldung: 26.06.2019
(73) Patentinhaber: Schunk Carbon Technology GmbH, 4822 Bad Goisern (AT)
(72) Erfinder: RASTL, Hans, 4822 Bad Goisern (AT); GADOCHA, Siegfried, 5360 St. Wolfgang (AT); WALLMANN, Herbert, 4822 Bad Goisern (AT); AIGNER, Robert, 4820 Bad Ischl (AT)
(74) Vertreter: advotec.

(56) Entgegenhaltungen:
- DE-A1- 2 002 307
- DE-A1- 2 130 199
- GB-A- 560 769
- HYUN-KIL CHO ET AL: "DC arc extinction using external magnetic field in switching device", 9. November 2003 (2003-11-09), ELECTRICAL MACHINES AND SYSTEMS, 2003. ICEMS 2003. SIXTH INTERNATIONAL CONFERENCE ON NOV. 9-11, 2003, PISCATAWAY, NJ, USA,IEEE, PAGE(S) 929 - 932VOL.2, XP032126491, ISBN: 978-7-5062-6210-1 * Seiten 929-931; Abbildungen 1-2 *
- SAWA KOICHIRO ET AL: "Fundamental characteristics of arc extinction by magnetic blow-out at DC voltages (<500V) II", 2015 IEEE 61ST HOLM CONFERENCE ON ELECTRICAL CONTACTS (HOLM), IEEE, 11. Oktober 2015 (2015-10-11), Seiten 154-159, XP032832717, DOI: 10.1109/HOLM.2015.7355089 [gefunden am 2015-12-11]

## Beschreibung

Die Erfindung betrifft eine Kontakteinheit, insbesondere für eine Stromversorgung von Fahrzeugen über einen Fahrdraht, sowie ein Verfahren zum Lenken von Lichtbögen an einer Kontakteinheit, wobei die Kontakteinheit eine Gleitkontaktvorrichtung umfasst, die eine Schleifleistenträgereinrichtung und eine daran angeordnete Schleifleiste aufweist, wobei die Kontakteinheit eine Lenkeinrichtung für Lichtbögen aufweist, die an der Kontakteinheit angeordnet ist, wobei die Lenkeinrichtung mit einem Magneten ausgebildet ist. Weiter betrifft die Erfindung eine Verwendung eines Magneten zum Lenken oder Löschen von Lichtbögen an einer Kontakteinheit.

Zur Stromversorgung von schienengebundenen, aber auch nicht schienengebundenen, mit Elektromotoren betriebenen Fahrzeugen werden Kontakteinheiten mit Gleitkontaktvorrichtungen verwendet, die eine Schleifleiste und eine Schleifleistenträgereinrichtung umfassen. Diese Gleitkontaktvorrichtungen werden mit einer Andruckvorrichtung beziehungsweise einer Positioniervorrichtung der Kontakteinheit, wie beispielsweise einem Pantograph oder einer Schwinge, unter Ausbildung einer Andruckkraft gegen einen Fahrstromleiter beziehungsweise Fahrdraht gedrückt. Dadurch wird ein Gleitkontakt ausgebildet, wodurch eine Stromversorgung des Fahrzeugs während einer Fahrt oder auch einem Stopp des Fahrzeugs ermöglicht wird.

Wesentlich ist dabei, dass auch während eines dynamischen Fahrbetriebs von derartigen Fahrzeugen eine möglichst kontinuierliche Aufrechterhaltung des Gleitkontakts zwischen der Schleifleiste und dem Fahrdraht gewährleistet ist. Es kann jedoch nicht immer ein ununterbrochener Kontakt zwischen der Schleifleiste und dem Fahrdraht sichergestellt werden. Insbesondere bei einer Bildung von Reif, Eis oder sonstigen Anhaftungen am Fahrdraht sind kurzzeitige Ablösungen der Schleifleiste vom Fahrdraht unvermeidlich. Unter anderem bedingt durch diese Ablösungen ist regelmäßig ein elektrischer Überschlag beziehungsweise eine Bildung eines Lichtbogens zwischen dem Fahrdraht und der Schleifleistenträgereinrichtung oder sogar der Positioniervorrichtung zu beobachten, welcher eine Beschädigung der Gleitkontaktvorrichtung oder Bauteilen der Positioniervorrichtung zur Folge haben kann. Auch bereits beim bloßen Kontaktieren des Fahrdrahts mit der Schleifleiste können sich Lichtbögen ausbilden. Eine Ausbildung von Lichtbögen wird auch durch eine erhöhte Luftfeuchtigkeit im Bereich zwischen der Gleitkontaktvorrichtung und dem Fahrdraht begünstigt. Gerade die regelmäßig aus Metall ausgebildete Schleifleistenträgereinrichtung kann durch Lichtbögen stark beschädigt werden, wodurch verkürzte Inspektions- und Austauschintervalle erforderlich werden.

Die Schleifleistenträgereinrichtung ist häufig aus einem Aluminiumprofil mit einer U-förmigen Aufnahme für die aus einem metallimprägnierten Kohlenstoffmaterial, Hartkohle, Graphit oder einer Metalllegierung bestehende Schleifleiste ausgebildet. Die Schleifleiste kann dabei mit dem Aluminiumprofil verklebt oder auch an der U-förmigen Aufnahme formschlüssig, durch Verbiegen oder Bördeln von Schenkeln der U-förmigen Aufnahme, geklemmt sein. Die Schleifleistenträgereinrichtung kann auch ein sogenannter Hilfsträger sein, der fest an einer Wippe eines Pantographen oder einer Schwinge montiert ist. Bei der Ausbildung eines Lichtbogens zwischen dem Fahrdraht und der Schleifleistenträgereinrichtung kommt es zu einem Wärmeeintrag in die Schleifleistenträgereinrichtung und die Schleifleiste, wobei Material der Schleifleistenträgereinrichtung geschmolzen, verdampft oder abgelöst werden kann. Bei einer wiederholten Ausbildung von Lichtbögen kann die Schleifleistenträgereinrichtung daher stellenweise aufgezehrt und dadurch geschwächt beziehungsweise zerstört werden.

Aus der EP 2 746 091 B1 ist eine Gleitkontaktvorrichtung bekannt, die eine Bildung von Lichtbögen zwischen einer Schleifleistenträgereinrichtung und einem Fahrdraht verhindern soll. Insbesondere ist an der Schleifleistenträgereinrichtung ein Strömungskanal ausgebildet, der während einer Fahrt des Fahrzeugs eine gezielte Führung eines Luftstromes derart ermöglicht, dass ein Lichtbogen von der Schleifleistenträgereinrichtung auf die Schleifleiste umgelenkt wird. Nachteilig ist jedoch, dass es während eines Stehens oder auch bei geringen Geschwindigkeiten des Fahrzeugs mangels einer Luftströmung dennoch zu einem Überschlag des Lichtbogens zwischen Fahrdraht und Schleifleistenträgereinrichtung kommt. Gleichwohl ist es auch nicht mehr möglich, mittels einer ausgebildeten Luftströmung einen derartigen Überschlag sicher zu verhindern. Darüber hinaus ist es wünschenswert, auch die Positioniervorrichtung einer Kontakteinheit vor einem Lichtbogenüberschlag zu schützen.

Die GB 560 769 A offenbart eine Vorrichtung zur Unterbrechung einer Stromversorgung eines elektrisch angetriebenen Fahrzeugs mittels eines an dem Fahrzeug angeordneten Schleifstücks, welches an einer stromführenden Schiene entlang gleitet. Die Vorrichtung umfasst eine erste Platte, welche mit der Schiene elektrisch leitend verbunden ist, sowie eine gegenüber der Schiene elektrisch isolierte zweite Platte. Zwischen den beiden Platten ist eine mit einem Magneten ausgebildete Lenkeinrichtung für Lichtbögen angeordnet, wobei als Magnet ein Elektromagnet oder ein Permanentmagnet vorgesehen sein kann. Passiert das Schleifstück nun einen Spalt, so wird die Stromversorgung des Fahrzeugs unterbrochen und ein dabei entstehender Lichtbogen kann mittels der Lenkeinrichtung in eine Kammer der Lenkreinrichtung gelenkt und dort ausgelöscht werden. Mithin besteht die technische Wirkung der Lenkeinrichtung bei dem Gegenstand dieses Dokuments darin, Lichtbögen, die während einer Unterbrechung einer Stromversorgung entstehen, umzulenken bzw. auszulöschen. Mit anderen Worten wird die Lenkeinrichtung ausschließlich im Rahmen eines Abbremsens des Fahrzeugs wirksam.

Die DE 21 30 199 A1 offenbart eine Kontakteinheit für eine Stromversorgung von Fahrzeugen über einen Fahrdraht mit einem Gleitkontakt sowie einer Lichtbogenelektrode. Zwischen dem Fahrdraht und der Lichtbogenelektrode ist ein Lichtbogen ausbildbar, der sich mittels einer Lenkeinrichtung umlenken bzw. stabilisieren lässt. Die Lenkeinrichtung ist hier mit einem Elektromagneten ausgebildet. In Abhängigkeit von einer Fahrgeschwindigkeit des Fahrzeugs kann das Fahrzeug entweder über den Gleitkontakt oder über die Lichtbogenelektrode mit Strom versorgt werden.

Eine weitere Kontakteinheit für eine Stromversorgung von Fahrzeugen über einen Fahrdraht zeigt die DE 20 02 307 A1. Insbesondere ist aus diesem Dokument eine Kontakteinheit ersichtlich, welche mit einer Lenkeinrichtung bzw. Blaseinrichtung ausgerüstet ist, mittels der sich ein zwischen einem Fahrdraht und der Kontakteinheit ausgebildeter Lichtbogen umlenken bzw. an eine bestimmte Stelle der Kontakteinheit treiben lässt. Die Lenkeinrichtung ist hier ebenfalls mit einem Elektromagneten ausgebildet. Ähnlich wie bei der DE 21 30 199 A1 liegt auch der DE 20 02 307 A1 die technische Lehre zu Grunde, das Fahrzeug oberhalb einer bestimmten Fahrgeschwindigkeit nicht über einen Gleitkontakt, sondern über einen Lichtbogen mit Strom zu versorgen.

Der vorliegenden Erfindung liegt daher die Aufgabe zugrunde, eine Kontakteinheit sowie ein Verfahren zum Ableiten von Lichtbögen vorzuschlagen, mittels der beziehungsweise dem eine Beschädigung der Kontakteinheit durch Lichtbögen besser verhindert werden kann.

Diese Aufgabe wird durch eine Kontakteinheit mit den Merkmalen des Anspruchs 1, ein Verfahren mit den Merkmalen des Anspruchs 15 sowie eine Verwendung mit den Merkmalen des Anspruchs 16 gelöst.

Die erfindungsgemäße Kontakteinheit, insbesondere für eine Stromversorgung von Fahrzeugen über einen Fahrdraht, umfasst eine Gleitkontaktvorrichtung, wobei die Gleitkontaktvorrichtung eine Schleifleistenträgereinrichtung und eine daran angeordnete Schleifleiste aufweist, wobei die Kontakteinheit eine Lenkeinrichtung für Lichtbögen aufweist, die an der Kontakteinheit beziehungsweise benachbart der Kontakteinheit angeordnet ist, wobei die Lenkeinrichtung mit einem Magneten ausgebildet ist, wobei der Magnet an einem Tragprofil der Schleifleistenträgereinrichtung angeordnet ist, wobei mittels des Magneten ein Lichtbogen von dem Tragprofil abweisbar und zu der Schleifleiste hin leitbar oder löschbar ist.

Eine derartige Kontakteinheit kann aus einer aus einem Kohlenstoffmaterial, Graphit oder einer Metalllegierung bestehenden Schleifleiste an einem Pantographen oder einer Schwinge ausgebildet sein. Durch die Lenkeinrichtung wird es dann möglich, zwischen der Kontakteinheit und dem Fahrdraht überspringende Lichtbögen gezielt so zu lenken, dass Lichtbögen in die Schleifleiste eingeleitet und von der Schleifleistenträgereinrichtung ferngehalten werden. Durch einen Einschlag eines Lichtbogens in die Schleifleiste, wird lediglich die Schleifleiste erwärmt und nicht ein die Schleifleiste halterndes Tragprofil der Schleifleistenträgereinrichtung, welches regelmäßig aus Metall ausgebildet ist. Eine Zerstörung beziehungsweise ein Aufschmelzen dieses Metalls infolge einer Wärmeeinwirkung durch einen Lichtbogeneinschlag kann so verhindert werden. Weiter kann sogar ein Auslöschen eines Lichtbogens erfolgen, sodass der Lichtbogen noch nicht einmal von dem Fahrdraht auf die Gleitkontaktvorrichtung überspringt. Der Magnet kann beliebig ausgebildet oder an der Schleifleistenträgereinrichtung angeordnet sein, wobei alleine wesentlich ist, dass die Ausbildung und Anordnung des Magneten einen Überschlag eines Lichtbogens in ein Tragprofil verhindert und den Lichtbogen in die Schleifleiste umleitet. Die Lenkeinrichtung für Lichtbögen bildet demnach einen im Wesentlichen verschleißfreien Schutz vor Lichtbögen aus. Ein übermäßiger Wärmeeintrag oder ein Verzehr eines Materials des Trägerprofils durch Lichtbögen kann so während eines Stillstands oder einer Fahrt des Fahrzeugs und auch bei einer bloßen Kontaktierung eines Fahrdrahts mit der Gleitkontaktvorrichtung wirkungsvoll verhindert und damit eine Lebensdauer der Gleitkontaktvorrichtung und einer Positioniervorrichtung verlängert werden.

Erfindungsgemäß ist der Magnet an einem Tragprofil der Schleifleistenträgereinrichtung angeordnet, wobei mittels des Magneten ein Lichtbogen von dem Tragprofil abweisbar und zu der Schleifleiste hin leitbar oder löschbar ist. Der Magnet ist dann in Art eines Ablenkmagneten ausgebildet, der einen Einschlag eines Lichtbogens in das Tragprofil verhindert. Eine Stärke eines Magnetfelds des Magneten muss dabei noch nicht einmal besonders groß sein. So wird auch schon bereits von Magnetfeldern geringer Stärke eine ablenkende Kraft auf Lichtbögen ausgeübt. Das Tragprofil kann beispielsweise aus Aluminium oder einem anderen geeigneten Metall bestehen. Besonders vorteilhaft ist es, wenn das Tragprofil selbst nicht magnetisch oder magnetisierbar ist.

Besonders vorteilhaft ist es, wenn eine Umlenkung oder ein Auslöschen eines Lichtbogens mittels eines Magnetfeldes des Magneten erfolgt. Der Magnet kann so beschaffen und angeordnet sein, dass insbesondere im Bereich eines Tragprofils der Schleifleistenträgereinrichtung ein Magnetfeld des Magneten ausgebildet beziehungsweise angeordnet ist. Wie sich gezeigt hat, kann ein Magnetfeld einen Lichtbogen umlenken oder auslöschen, sodass der Lichtbogen nicht in das Tragprofil einschlägt.

Die Lenkeinrichtung kann mit einer Vielzahl von Magneten ausgebildet sein. So wird es dann auch möglich ein Tragprofil der Schleifleistenträgervorrichtung entlang einer Länge innerhalb der regelmäßig ein Fahrdraht quer zur Schleifleiste bewegt wird, vor einem Lichtbogeneinschlag zu schützen.

Daher kann vorgesehen sein, die Magnete in regelmäßigen Abständen entlang einer Länge der Schleifleistenträgereinrichtung anzuordnen. Wesentlich ist hier, dass Magnetfelder der Magnete dann so ausgebildet sind, dass Abstände zwischen den Magneten von den Magnetfeldern überbrückt werden. Beispielsweise können die Magnetfelder benachbarter Magnete einander überlappen. So kann verhindert werden, dass ein Lichtbogen zwischen zwei Magneten in das Tragprofil einschlägt.

Der Magnet kann ein Dauermagnet oder auch ein Elektromagnet sein. Mit einem Dauermagnet kann allzeit eine Umlenkung oder Auslöschung von Lichtbögen realisiert werden. Mit einem Elektromagnet kann ein Magnetfeld nach Bedarf ausgebildet werden, beispielsweise, wenn aufgrund bestimmter Witterungsbedingungen ein Lichtbogeneinschlag wahrscheinlich ist. Der Elektromagnet kann einfach mit Strom versorgt werden, da dieser bei elektrisch angetriebenen Fahrzeugen über den Fahrdraht verfügbar ist.

In einer besonders einfachen Ausführungsform kann der Magnet ein Stabmagnet sein. Der Stabmagnet kann dann entlang einer Länge der Schleifleistenträgervorrichtung angeordnet sein. Stabmagnete sind einfach und kostengünstig in großer Stückzahl verfügbar.

Der Magnet kann innerhalb und/oder auch außerhalb des Tragprofils an diesem angeordnet sein. Durch eine Anordnung innerhalb des Tragprofils wird der Magnet vor Umwelteinflüssen geschützt. Auch wird eine Außenkontur des Tragprofils nicht verändert, wodurch dann auch keine Änderung von aerodynamischen Eigenschaften der Gleitkontaktvorrichtung erfolgt. Gleichwohl ist es möglich den Magnet an einer Außenfläche des Tragprofils anzuordnen beziehungsweise zu befestigen. Prinzipiell kann so auch eine Nachrüstung einer Gleitkontaktvorrichtung nach dem Stand der Technik mit einem Magnet erfolgen.

Der Magnet kann auf einer einer Fahrtrichtung abgewandten Längsseite und/oder einer der Fahrtrichtung zugewandten Längsseite des Tragprofils angeordnet sein. Da ein während einer Fahrt des Fahrzeugs an der Gleitkontaktvorrichtung ausgebildeter Luftstrom ebenfalls ein Überschlag eines Lichtbogens beziehungsweise dessen Weg beeinflusst, kann der Magnet zumindest an der der Fahrtrichtung abgewandten Längsseite angeordnet sein. Ist an den gegenüberliegenden Längsseiten jeweils ein Magnet angeordnet, kann darüber hinaus sichergestellt werden, dass bei einer Kontaktierung eines Fahrdrahtes bei einem stehenden Fahrzeug in jedem Fall ein Lichtbogeneinschlag in das Tragprofil verhindert wird. Beispielsweise kann dann jeweils an den Längsseiten, innerhalb oder außerhalb des Tragprofils, eine Reihe von Magneten angeordnet sein. Je nach Art und Stärke des Magnetfelds kann noch ein Magnet oder eine Mehrzahl von Magneten mittig, innerhalb des Tragprofils, angeordnet sein. Wesentlich dabei ist, dass stets eine Außenkontur des Tragprofils noch von einem ausreichend starken Magnetfeld überdeckt ist.

Eine Symmetrieachse eines Magnetfeldes des Magneten kann durch die Längsseite oder durch die Schleifleiste verlaufen. Das heißt, es ist prinzipiell möglich einen stabförmigen Magneten mit dessen Magnetfeld in Richtung der Schleifleiste oder quer dazu anzuordnen. Gleichwohl ist es möglich diesen Magneten im Wesentlichen parallel zu einem Fahrdraht anzuordnen, sodass die Symmetrieachse des Magnetfelds dann durch die Längsseite verläuft.

Die Lenkeinrichtung kann ein Halteprofil aufweisen, welches entlang eines Tragprofils der Schleifleistenträgereinrichtung verläuft, und an dem ein Magnet angeordnet beziehungsweise befestigt sein kann, wobei das Halteprofil an dem Tragprofil lösbar befestigt sein kann, wobei mittels des Magneten ein Lichtbogen von dem Tragprofil und dem Halteprofil abweisbar und zu der Schleifleiste hin leitbar oder löschbar sein kann. Bei dieser Ausführungsform einer Lenkeinrichtung muss dann der Magnet nicht direkt an dem Tragprofil befestigt werden. So ist es beispielsweise möglich das Halteprofil zusammen mit dem Magnet zu montieren und dann an dem Tragprofil zu befestigen. Eine Nachrüstung bestehender Gleitkontaktvorrichtungen aus dem Stand der Technik mit einer Lenkeinrichtung kann so wesentlich vereinfacht werden.

Besonders vorteilhaft ist es, wenn der Magnet angrenzend einer Oberkante des Tragprofils angeordnet ist. Der Magnet liegt an einer äußeren Grenze zwischen Tragprofil und Schleifleiste in einem vergleichsweise kurzen Abstand zu einem Fahrdraht, sodass ein Lichtbogen zunächst das Magnetfeld des Magneten durchdringen müsste, um das Tragprofil zu kontaktieren. Eine Umleitung des Lichtbogens in die Schleifleiste wird durch diese Anordnung an der Oberkante des Tragprofils einfacher möglich.

Alternativ kann die Lenkeinrichtung ein Halteprofil aufweisen, welches paralell zu einem Tragprofil der Schleifleistenträgereinrichtung verlaufen kann, und an dem dann der Magnet angeordnet ist, wobei das Halteprofil relativ zu dem Tragprofil in einem Abstand zu diesem an der Schleifleistenträgereinrichtung angeordnet sein kann, wobei mittels des Magneten ein Lichtbogen von dem Tragprofil abweisbar und zu der Schleifleiste hin leitbar oder löschbar sein kann. Insbesondere, wenn das Tragprofil und andere Bauteile der Schleifleistenträgereinrichtung aus magnetisierbaren werkstoffen ausgebildet sind, kann ein Magnetfeld des Magneten beeinflusst werden. Daher ist es vorteilhaft, wenn der Magnet in einem geeigneten Abstand zu diesen Bauteilen benachbart dem Tragprofil angeordnet ist. Das Halteprofil kann dann auch so breit ausgebildet sein, das es einen Querschnitt des Tragprofils seitlich überragt.

Weiter kann die Kontakteinheit eine Positioniervorrichtung zur Halterung und Positionierung der Gleitkontaktvorrichtung an einem Fahrdraht umfassen, wobei die Positioniervorrichtung die Lenkeinrichtung aufweisen kann, wobei der Magnet an einem Abschnitt der Positioniervorrichtung angeordnet sein kann, wobei in einer Kontaktposition der Positioniervorrichtung, in der die Schleifleiste den Fahrdraht kontaktiert, der Abschnitt relativ zu dem Fahrdraht den kürzesten Abstand der Positioniervorrichtung zu dem Fahrdraht aufweist, wobei mittels des Magneten ein Lichtbogen von dem Abschnitt abweisbar und zu der Schleifleiste hin leitbar oder löschbar sein kann. Die Lenkeinrichtung kann demnach auch an der Positioniervorrichtung angeordnet sein und einen Überschlag eines Lichtbogens beziehungsweise dessen Einschlag in die Positioniervorrichtung verhindern. Die Positioniervorrichtung kann ein Pantograph, eine Schwinge oder ähnliches sein. Ein Einschlag eines Lichtbogens in die Positioniervorrichtung kann besonders große Schäden an der Positioniervorrichtung zur Folge haben. Gerade die Abschnitte der Positioniervorrichtung, die einem Fahrdraht dicht angenähert sind, wie beispielsweise ein Scheitelrohr, sind hier besonders gefährdet.

Um die Kontakteinheit noch sicherer auszubilden, kann die Gleitkontaktvorrichtung und die Positioniervorrichtung jeweils eine Lenkeinrichtung aufweisen.

Bei dem erfindungsgemäßen Verfahren zum Lenken von Lichtbögen an einer Kontakteinheit, insbesondere für eine Stromversorgung von Fahrzeugen über einen Fahrdraht, wird eine Schleifleistenträgereinrichtung mit einer darin angeordneten Schleifleiste einer Gleitkontaktvorrichtung der Kontakteinheit mit einem Fahrdraht mittels einer Positioniervorrichtung der Kontakteinheit kontaktiert, wobei ein Lichtbogen zwischen dem Fahrdraht und der Schleifleiste ausgebildet wird, wobei der Lichtbogen mittels einer mit einem Magneten ausgebildeten Lenkeinrichtung der Kontakteinheit ausgelöscht oder zu der Schleifleiste hin geleitet wird und die Schleifleiste kontaktiert, wobei der Magnet an einem Tragprofil der Schleifleistenträgereinrichtung angeordnet wird, wobei mittels des Magneten der Lichtbogen von dem Tragprofil abgewiesen und zu der Schleifleiste hin geleitet oder gelöscht wird.

Unter einem Auslöschen des Lichtbogens wird hier verstanden, dass der Lichtbogen gar nicht erst entsteht oder zumindest teilweise bei einem Überschlag abgeschwächt wird. Die Positioniervorrichtung dient zur Halterung und Positionierung der Gleitkontaktvorrichtung, sodass mittels der Positioniervorrichtung die Schleifleiste an den Fahrdraht herangeführt und mit diesem kontaktiert werden kann. Der Lichtbogen zwischen der Schleifleiste und dem Fahrdraht kann vor oder während einer Kontaktierung ausgebildet werden. Das Fahrzeug kann sich dabei in Bewegung befinden oder auch auf einer Fahrstrecke unbewegt stehen. Wesentlich ist, dass ein Lichtbogen alleine zwischen dem Fahrdraht und der Schleifleiste ausgebildet wird, wenn es zu einer Entstehung eines Lichtbogens kommt. Die Lenkeinrichtung beziehungsweise der die Lenkeinrichtung ausbildende Magnet stellt hier sicher, dass der Lichtbogen keine anderen Bauteile der Gleitkontaktvorrichtung oder der Positioniervorrichtung erreicht beziehungsweise in diese einschlägt. Zu weiteren Vorteilen des erfindungsgemäßen Verfahrens wird auf die Vorteilsbeschreibung der erfindungsgemäßen Kontakteinheit verwiesen.

Weitere vorteilhafte Ausführungsformen des Verfahrens ergeben sich aus den Merkmalsbeschreibungen der auf den Vorrichtungsanspruch 1 rückbezogenen Unteransprüche.

Bei der erfindungsgemäßen Verwendung eines Magneten zum Lenken oder Löschen von Lichtbögen an einer Kontakteinheit, insbesondere für eine Stromversorgung von Fahrzeugen über einen Fahrdraht, umfasst die Kontakteinheit eine Gleitkontaktvorrichtung mit einer Schleifleistenträgereinrichtung und einer daran angeordneten Schleifleiste sowie eine Positioniervorrichtung zur Halterung und Positionierung der Gleitkontaktvorrichtung, wobei der Magnet eine Lenkeinrichtung für Lichtbögen ausbildet und an der Kontakteinheit angeordnet ist, wobei der Magnet an einem Tragprofil der Schleifleistenträgereinrichtung angeordnet ist, wobei mittels des Magneten ein Lichtbogen von dem Tragprofil abweisbar und zu der Schleifleiste hin leitbar oder löschbar ist. Zu den Vorteilen der erfindungsgemäßen Verwendung eines Magneten wird auf die Vorteilsbeschreibung der erfindungsgemäßen Vorrichtung und des erfindungsgemäßen Verfahrens verwiesen.

Weitere Ausführungsformen einer Verwendung ergeben sich aus den Merkmalsbeschreibungen der auf den Vorrichtungsanspruch 1 rückbezogenen Unteransprüche.

Im Folgenden wird die Erfindung unter Bezugnahme auf die beigefügten Zeichnungen näher erläutert.

Es zeigen:
- **Fig. 1**: eine Gleitkontaktvorrichtung nach dem Stand der Technik in einer Querschnittansicht;
- **Fig. 2**: eine erste Ausführungsform einer Gleitkontaktvorrichtung in einer Querschnittansicht;
- **Fig. 3**: eine zweite Ausführungsform einer Gleitkontaktvorrichtung in einer Querschnittansicht;
- **Fig. 4**: eine dritte Ausführungsform einer Gleitkontaktvorrichtung in einer Querschnittansicht;
- **Fig. 5**: eine vierte Ausführungsform einer Gleitkontaktvorrichtung in einer Querschnittansicht;
- **Fig. 6**: eine fünfte Ausführungsform einer Gleitkontaktvorrichtung in einer Querschnittansicht;
- **Fig. 7**: eine sechste Ausführungsform einer Gleitkontaktvorrichtung in einer Querschnittansicht.

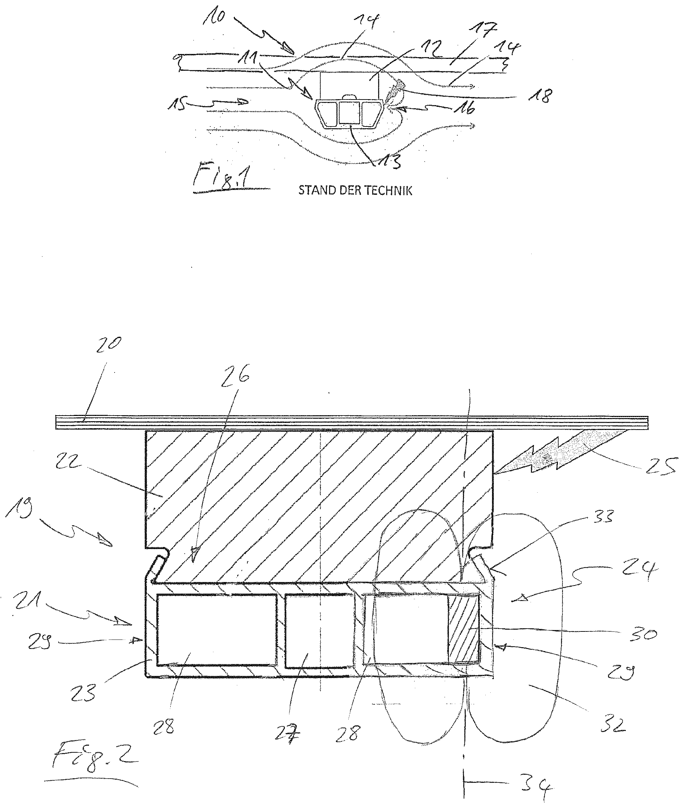

Die **Fig. 1** zeigt eine Gleitkontaktvorrichtung 10 einer hier nicht näher dargestellten Kontakteinheit nach dem Stand der Technik in einer Querschnittansicht, umfassend eine Schleifleistenträgereinrichtung 11 und eine Schleifleiste 12, die auf einem Tragprofil 13 der Schleifleistenträgereinrichtung 11 angeordnet und befestigt ist. Wie hier mit einer Linie 14 angedeutet, wird während einer Fahrt eines hier nicht dargestellten Fahrzeugs die Gleitkontaktvorrichtung 10 von einer Luftströmung 15 umströmt, die an einer Längsseite 16 der Gleitkontaktvorrichtung 10 verwirbelt. Zwischen einem Fahrdraht 17, der quer zu der Gleitkontaktvorrichtung 10 verläuft und mit dieser kontaktiert ist, und dem Tragprofil 13 ist ein Lichtbogen 18 ausgebildet. Durch den Lichtbogen 18 an dem Tragprofil 13 kommt es zu einer Ablösung eines Materials des Tragprofils 13 sowie zu einer punktuellen Erwärmung desselben.

Die **Fig. 2** zeigt eine Ausführungsform einer Gleitkontaktvorrichtung 19, die hier an einer nicht näher dargestellten Positioniervorrichtung zur Positionierung der Gleitkontaktvorrichtung 19 an einem Fahrdraht 20 angeordnet ist und zusammen mit dieser eine Kontakteinheit ausbildet. Die Gleitkontaktvorrichtung 19 umfasst eine Schleifleistenträgereinrichtung 21 und eine daran angeordnete Schleifleiste 22. Die Schleifleistenträgereinrichtung 21 ist aus einem Tragprofil 23 ausgebildet und umfasst eine Lenkeinrichtung 24 zum Umlenken oder Auslöschen von Lichtbögen 25. Die Schleifleiste 22 besteht aus Graphit und ist in eine trapezförmige Aufnahmenut 26 des Tragprofils 23 aus Aluminium eingesetzt. Die Schleifleiste 22 kann unter anderem auch mit einem hier nicht dargestellten Klebermaterial in der Aufnahmenut 26 mit dem Tragprofil 23 verbunden sein. Das Tragprofil 23 ist mit einer mittleren Hohlkammer 27 und zwei äußeren Hohlkammern 28 ausgebildet. Die äußeren Hohlkammern 28 grenzen an Längsseiten 29 des Tragprofils 23. In einer Hohlkammer 28 ist ein Magnet 30 an der Längsseite 29 eingesetzt, wobei der Magnet die Lenkeinrichtung 24 für den Lichtbogen 25 ausbildet. Insbesondere ist ein Magnetfeld 32 des Magneten 30 so ausgebildet, dass eine Kontur 33 der Längsseite 29 im Wesentlichen innerhalb des Magnetfelds 32 liegt. Das Magnetfeld 32 verhindert einen Einschlag des Lichtbogens 25 in das Tragprofil 23 dadurch, dass der Lichtbogen 25 durch das Magnetfeld 32 zu der Schleifleiste 22 hin umgelenkt wird. Eine Symmetrieachse 34 des Magnetfeldes 32 verläuft dabei durch die Schleifleiste 22.

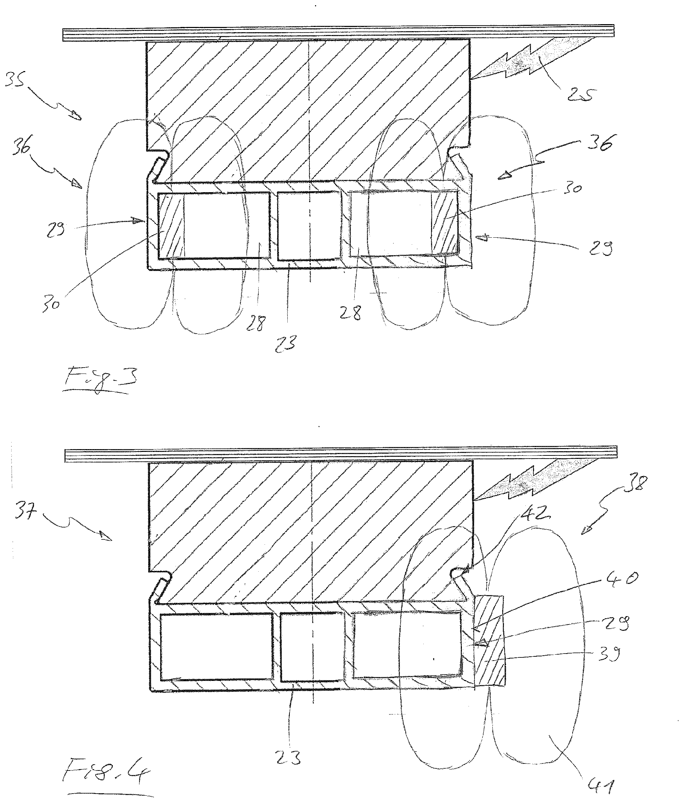

Die **Fig. 3** zeigt eine Ausführungsform einer Gleitkontaktvorrichtung 35, die im Unterschied zu der Gleitkontaktvorrichtung aus **Fig. 2** eine Lenkeinrichtung 36 mit zwei Magneten 30 aufweist, die jeweils in den äußeren Hohlkammern 28 an den Längsseiten 29 angeordnet sind. Diese Lenkeinrichtung 36 ermöglicht somit ein Umlenken von Lichtbögen 25 an beiden Längsseiten 29 des Tragprofils 23.

Die **Fig. 4** zeigt eine Ausführungsform einer Gleitkontaktvorrichtung 37, die im Unterschied zu der Gleitkontaktvorrichtung aus **Fig. 2** eine Lenkeinrichtung 38 aufweist, deren Magnet 39 an der Längsseite 29 an einer Außenfläche 40 des Tragprofils 23 angeordnet ist. Ein Magnetfeld 41 des Magneten 39 kann hier dichter an eine Oberkante 42 des Tragprofils 23 verlagert werden.

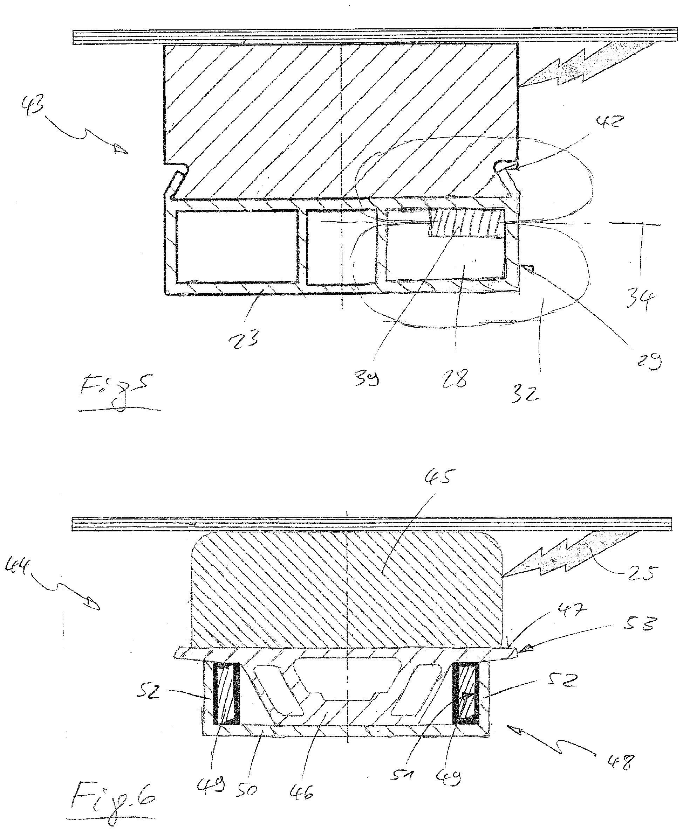

Die **Fig. 5** zeigt eine Ausführungsform einer Gleitkontaktvorrichtung 43, bei der im Unterschied zu der Gleitkontaktvorrichtung aus **Fig. 2** der Magnet 39 mit der Symmetrieachse 34 des Magnetfeldes 32 so in der Hohlkammer 28 angeordnet ist, dass die Symmetrieachse durch die Längsseite 29 verläuft. Gleichwohl wird von dem Magnetfeld 32 die Oberkante 42 des Tragprofils 23 mit erfasst beziehungsweise überdeckt.

Die **Fig. 6** zeigt eine Ausführungsform einer Gleitkontaktvorrichtung 44 mit einer Schleifleiste 45, welche auf einem Tragprofil 46 beziehungsweise auf dessen Oberfläche 47 mit hier nicht dargestellten Klebermaterial befestigt ist. Die Gleitkontaktvorrichtung 44 umfasst hier eine Lenkeinrichtung 48 mit zwei Magneten 49, wobei die Magnete 49 an einem Halteprofil 50 der Lenkeinrichtung 48 befestigt sind. Das Halteprofil 50 ist U-förmig ausgebildet, und die Magnete 49 sind an einer Innenseite 51 von Schenkeln 52 des U-förmigen Halteprofils 50 befestigt. Das Halteprofil 50 ist seinerseits mit dem Tragprofil 46 mittels einer hier nicht näher dargestellten Verschraubung fest verbunden. Mithilfe des Halteprofils 50 können die Magnete 49 so dicht an einer Außenkante 53 des Tragprofils 46 positioniert werden, dass in dem Bereich der Außenkante 53 ein Einschlag eines Lichtbogens 25 weitestgehend verhindert werden kann.

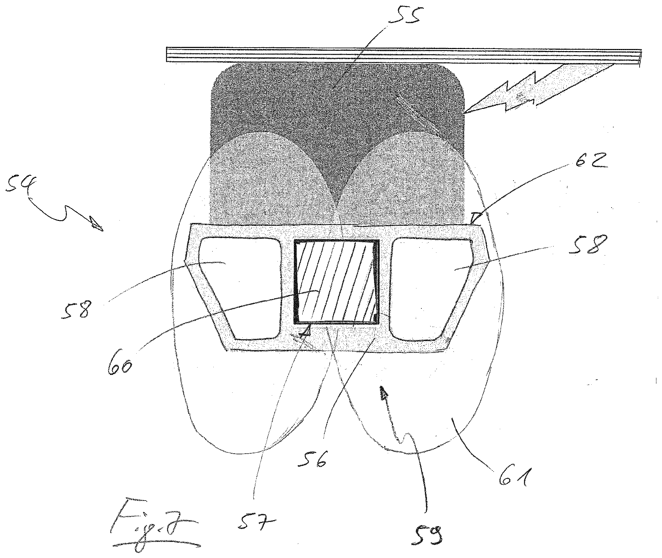

Die **Fig. 7** zeigt eine Ausführungsform einer Gleitkontaktvorrichtung 54, umfassend eine Schleifleiste 55 und ein Tragprofil 56. Das Tragprofil 56 weist hier eine mittlere Hohlkammer 57 und zwei äußere Hohlkammern 58 auf. Eine Lenkeinrichtung 59 der Gleitkontaktvorrichtung 54 ist hier durch einen Magneten 60 ausgebildet, der in die mittlere Hohlkammer 57 eingesetzt ist. Der Magnet 60 ist vergleichsweise groß bemessen, sodass ein Magnetfeld 61 des Magneten 60 Oberkanten 62 des Tragprofils 56 beiderseits überdeckt.

## Patentansprüche

1. Kontakteinheit, insbesondere für eine Stromversorgung von Fahrzeugen über einen Fahrdraht (20), umfassend eine Gleitkontaktvorrichtung (19, 35, 37, 43, 44, 54), wobei die Gleitkontaktvorrichtung eine Schleifleistenträgereinrichtung (21) und eine daran angeordnete Schleifleiste (22, 45, 55) aufweist,
wobei die Kontakteinheit eine Lenkeinrichtung (24, 36, 38, 48, 59) für Lichtbögen (25) aufweist, die an der Kontakteinheit angeordnet ist, wobei die Lenkeinrichtung mit einem Magneten (30, 39, 49, 60) ausgebildet ist,
**dadurch gekennzeichnet,**
**dass** der Magnet an einem Tragprofil (23, 46, 56) der Schleifleistenträgereinrichtung angeordnet ist, wobei mittels des Magneten ein Lichtbogen von dem Tragprofil abweisbar und zu der Schleifleiste hin leitbar oder löschbar ist.

2. Kontakteinheit nach Anspruch 1,
**dadurch gekennzeichnet,**
**dass** eine Umlenkung oder ein Auslöschen eines Lichtbogens (25) mittels eines Magnetfeldes (32, 41, 61) des Magneten (30, 39, 49, 60) erfolgt.

3. Kontakteinheit nach Anspruch 1 oder 2
**dadurch gekennzeichnet,**
**dass** die Lenkeinrichtung (24, 36, 38, 48, 59) mit einer Vielzahl von Magneten (30, 39, 49, 60) ausgebildet ist.

4. Kontakteinheit nach Anspruch 3,
**dadurch gekennzeichnet,**
**dass** die Magnete (30, 39, 49, 60) in regelmäßigen Abständen entlang einer Länge der Schleifleistenträgereinrichtung (21) angeordnet sind.

5. Kontakteinheit nach einem der vorangehenden Ansprüche,
**dadurch gekennzeichnet,**
**dass** der Magnet (30, 39, 49, 60) ein Dauermagnet oder ein Elektromagnet ist.

6. Kontakteinheit nach einem der vorangehenden Ansprüche,
**dadurch gekennzeichnet,**
**dass** der Magnet (30, 39, 49, 60) ein Stabmagnet ist.

7. Kontakteinheit nach einem der vorangehenden Ansprüche,
**dadurch gekennzeichnet,**
**dass** der Magnet (30, 39, 49, 60) innerhalb und/oder außerhalb des Tragprofils (23, 46, 56) an diesem angeordnet ist.

8. Kontakteinheit nach einem der vorangehenden Ansprüche,
**dadurch gekennzeichnet,**
**dass** der Magnet (30, 39, 49, 60) auf einer einer Fahrtrichtung abgewandten Längsseite (29) und/oder einer der Fahrtrichtung zugewandten Längsseite des Tragprofils (23, 46, 56) angeordnet ist.

9. Kontakteinheit nach einem der vorangehenden Ansprüche,
**dadurch gekennzeichnet,**
**dass** eine Symmetrieachse (34) eines Magnetfeldes (32, 41, 61) des Magneten (30, 39, 49, 60) durch die Längsseite (29) oder durch die Schleifleiste (22, 45, 55) verläuft.

10. Kontakteinheit nach einem der Ansprüche 1 bis 6,
**dadurch gekennzeichnet,**
**dass** die Lenkeinrichtung (48) ein Halteprofil (50) aufweist, welches entlang eines Tragprofils (46) der Schleifleistenträgereinrichtung verläuft, und an dem der Magnet (49) angeordnet ist, wobei das Halteprofil an dem Tragprofil lösbar befestigt ist, wobei mittels des Magneten ein Lichtbogen (25) von dem Tragprofil und dem Halteprofil abweisbar und zu der Schleifleiste (45) hin leitbar oder löschbar ist.

11. Kontakteinheit nach einem der vorangehenden Ansprüche,
**dadurch gekennzeichnet,**
**dass** der Magnet (30, 39, 49, 60) angrenzend einer Oberkante (42, 62) des Tragprofils (23, 46, 56) angeordnet ist.

12. Kontakteinheit nach einem der Ansprüche 1 bis 6,
**dadurch gekennzeichnet,**
**dass** die Lenkeinrichtung ein Halteprofil aufweist, welches parallel zu einem Tragprofil (23, 46, 56) der Schleifleistenträgereinrichtung (21) verläuft, und an dem der Magnet (30, 39, 49, 60) angeordnet ist, wobei das Halteprofil relativ zu dem Tragprofil in einem Abstand zu diesem an der Schleifleistenträgereinrichtung angeordnet ist, wobei mittels des Magneten ein Lichtbogen (25) von dem Tragprofil abweisbar und zu der Schleifleiste (22, 45, 55) hin leitbar oder löschbar ist.

13. Kontakteinheit nach einem der Ansprüche 1 bis 6,
**dadurch gekennzeichnet,**
**dass** die Kontakteinheit eine Positioniervorrichtung zur Halterung und Positionierung der Gleitkontaktvorrichtung (19, 35, 37, 43, 44, 54) an einem Fahrdraht (20) umfasst, wobei die Positioniervorrichtung die Lenkeinrichtung (24, 36, 38, 48, 59) aufweist, wobei der Magnet (30, 39, 49, 60) an einem Abschnitt der Positioniervorrichtung angeordnet ist, wobei in einer Kontaktposition der Positioniervorrichtung, in der die Schleifleiste den Fahrdraht (20) kontaktiert, der Abschnitt relativ zu dem Fahrdraht den kürzesten Abstand der Positioniervorrichtung zu dem Fahrdraht aufweist, wobei mittels des Magneten ein Lichtbogen (25) von dem Abschnitt abweisbar und zu der Schleifleiste hin leitbar oder löschbar ist.

14. Kontakteinheit nach Anspruch 12 oder 13,
**dadurch gekennzeichnet,**
**dass** die Gleitkontaktvorrichtung (19, 35, 37, 43, 44, 54) und die Positioniervorrichtung jeweils eine Lenkeinrichtung (24, 36, 38, 48, 59) aufweisen.

15. Verfahren zum Lenken von Lichtbögen (25) an einer Kontakteinheit, insbesondere für eine Stromversorgung von Fahrzeugen über einen Fahrdraht (20), wobei eine Schleifleistenträgereinrichtung (21) mit einer daran angeordneten Schleifleiste (22, 45, 55) einer Gleitkontaktvorrichtung (19, 35, 37, 43, 44, 54) der Kontakteinheit mit einem Fahrdraht mittels einer Positioniervorrichtung der Kontakteinheit kontaktiert wird, wobei ein Lichtbogen zwischen dem Fahrdraht und der Schleifleiste ausgebildet wird,
wobei der Lichtbogen mittels einer mit einem Magneten (30, 39, 49, 60) ausgebildeten Lenkeinrichtung (24, 36, 38, 48, 59) der Kontakteinheit ausgelöscht oder zu der Schleifleiste hin geleitet wird und die Schleifleiste kontaktiert,
**dadurch gekennzeichnet,**
**dass** der Magnet an einem Tragprofil (23, 46, 56) der Schleifleistenträgereinrichtung angeordnet wird, wobei mittels des Magneten der Lichtbogen von dem Tragprofil abgewiesen und zu der Schleifleiste hin geleitet oder gelöscht wird.

16. Verwendung eines Magneten (30, 39, 49, 60) zum Lenken oder Löschen von Lichtbögen (25) an einer Kontakteinheit, insbesondere für eine Stromversorgung von Fahrzeugen über einen Fahrdraht (20), wobei die Kontakteinheit eine Gleitkontaktvorrichtung (19, 35, 37, 43, 44, 54) mit einer Schleifleistenträgereinrichtung (21) und eine daran angeordnete Schleifleiste (22, 45, 55) sowie eine Positioniervorrichtung zur Halterung und Positionierung der Gleitkontaktvorrichtung umfasst, wobei der Magnet eine Lenkeinrichtung (24, 36, 38, 48, 59) für Lichtbögen ausbildet und an der Kontakteinheit angeordnet ist,
**dadurch gekennzeichnet,**
**dass** der Magnet an einem Tragprofil (23, 46, 56) der Schleifleistenträgereinrichtung angeordnet ist, wobei mittels des Magneten ein Lichtbogen von dem Tragprofil abweisbar und zu der Schleifleiste hin leitbar oder löschbar ist.

## Claims

1. A contact unit, in particular for supplying vehicles with power via an overhead wire (20), the contact unit comprising a sliding contact device (19, 35, 37, 43, 44, 54), the sliding contact device having a contact strip support (21) and a contact strip (22, 45, 55) disposed thereon,
the contact unit having a steering device (24, 36, 38, 48, 59) for electric arcs (25) which is disposed on the contact unit, the steering device being provided with a magnet (30, 39, 49, 60),
**characterized in that**
the magnet is disposed on a support profile (23, 46, 56) of the contact strip support, wherein an electric arc can be deflected from the support profile and be steered toward the contact strip or be extinguished by means of the magnet.

2. The contact unit according to claim 1,
**characterized in that**
an electric arc (25) is deflected or extinguished by means of a magnetic field (32, 41, 61) of the magnet (30, 39, 49, 60).

3. The contact unit according to claim 1 or 2
**characterized in that**
the steering device (24, 36, 38, 48, 59) is provided with a plurality of magnets (30, 39, 49, 60).

4. The contact unit according to claim 3,
**characterized in that**
the magnets (30, 39, 49, 60) are disposed at regular intervals along a length of the contact strip support (21).

5. The contact unit according to any one of the preceding claims,
**characterized in that**
the magnet (30, 39, 49, 60) is a permanent magnet or an electromagnet.

6. The contact unit according to any one of the preceding claims,
**characterized in that**
the magnet (30, 39, 49, 60) is a rod magnet.

7. The contact unit according to any one of the preceding claims,
the magnet (30, 39, 49, 60) is disposed within and/or on the outside of the support profile (23, 46, 56).

8. The contact unit according to any one of the preceding claims,
**characterized in that**
the magnet (30, 39, 49, 60) is disposed on a longitudinal side (29) of the support profile (23, 46, 56) turned away from the direction of travel and/or on a longitudinal side of the support profile (23, 46, 56) turned toward the direction of travel.

9. The contact unit according to any one of the preceding claims,
**characterized in that**
a symmetry axis (34) of a magnetic field (32, 41, 61) of the magnet (30, 39, 49, 60) runs through the longitudinal side (29) or through the contact strip (22, 45, 55).

10. The contact unit according to any one of claims 1 to 6,
**characterized in that**
the steering device (48) has a holding profile (50) which extends along a support profile (46) of the contact strip support and on which the magnet (49) is disposed, the holding profile being removable attached to the support profile, wherein an electric arc (25) can be deflected from the support profile and from the holding profile and be steered toward the contact strip (45) or be extinguished by means of the magnet.

11. The contact unit according to any one of the preceding claims,
**characterized in that**
the magnet (30, 39, 49, 60) is disposed adjacent to an upper edge (42, 62) of the support profile (23, 46, 56).

12. The contact unit according to any one of claims 1 to 6,
**characterized in that**
the steering device has a holding profile which extends parallel to a support profile (23, 46, 56) of the contact strip support (21) and on which the magnet (30, 39, 49, 60) is disposed, the holding profile being disposed on the contact strip support at a distance relative to the support profile, wherein an electric arc (25) can be deflected from the support profile and be steered toward the contact strip (22, 45, 55) or be extinguished by means of the magnet.

13. The contact unit according to any one of claims 1 to 6,
**characterized in that**
the contact unit comprises a positioning device for holding and positioning the sliding contact device (19, 35, 37, 43, 44, 54) against an overhead wire (20), the positioning device having the steering device (24, 36, 38, 48, 59), the magnet (30, 39, 49, 60) being disposed on a portion of the positioning device, wherein, when the positioning device is in a contact position in which the contact strip is in contact with the overhead wire (20), said portion is the part of the positioning device that is closest to the overhead wire relative to the overhead wire, wherein an electric arc (25) can be deflected from said portion and be steered toward the contact strip or be extinguished by means of the magnet.

14. The contact unit according to claim 12 or 13,
**characterized in that**
the sliding contact device (19, 35, 37, 43, 44, 54) and the positioning device each have a steering device (24, 36, 38, 48, 59).

15. A method for steering electric arcs (25) on a contact unit, in particular for supplying vehicles with power via an overhead wire (20), a contact strip support (21) having a contact strip (22, 45, 55) of a sliding contact device (19, 35, 37, 43, 44, 54) of the contact unit disposed thereon is brought into contact with an overhead wire by means of a positioning device of the contact unit, an electric arc being formed between the overhead wire and the contact strip,
the electric arc being extinguished or steered toward the contact strip by means of a steering device (24, 36, 38, 48, 59) of the contact unit which is provided with a magnet (30, 39, 49, 60) and making contact with the contact strip,
**characterized in that**
the magnet is disposed on a support profile (23, 46, 56) of the contact strip support, wherein an electric arc can be deflected from the support profile and be steered toward the contact strip or be extinguished by means of the magnet.

16. A use of a magnet (30, 39, 49, 60) for steering or extinguishing electric arcs (25) on a contact unit, in particular for supplying vehicles with power via an overhead wire (20), the contact unit comprising a sliding contact device (19, 35, 37, 43, 44, 54) which has a contact strip support (21) and a contact strip (22, 45, 55) disposed thereon and a positioning device for holding and positioning the sliding contact device, the magnet forming a steering device (24, 36, 38, 48, 59) for electric arcs and being disposed on the contact unit,
**characterized in that**
the magnet is disposed on a support profile (23, 46, 56) of the contact strip support, wherein an electric arc can be deflected from the support profile and be steered toward the contact strip or be extinguished by means of the magnet.

## Revendications

1. Unité de contact, notamment pour alimenter des véhicules en courant par une caténaire (20), l'unité de contact comprenant un dispositif de contact glissant (19, 35, 37, 43, 44, 54), le dispositif de contact glissant ayant un support de bande de frottement (21) et une bande de frottement (22, 45, 55) disposée sur celui-ci,
l'unité de contact ayant un dispositif de direction (24, 36, 38, 48, 59) pour des arcs électriques (25) qui est disposé sur l'unité de contact, le dispositif de direction étant muni d'un aimant (30, 39, 49, 60),
**caractérisé en ce que**
l'aimant est disposé sur un profil de support (23, 46, 56) du support de bande de frottement, un arc électrique pouvant être dévié du profil de support et dirigé vers la bande de frottement ou éteint au moyen de l'aimant.

2. Unité de contact selon la revendication 1,
**caractérisé en ce**
**qu'**un arc électrique (25) est dévié ou éteint au moyen d'un champ magnétique (32, 41, 61) de l'aimant (30, 39, 49, 60).

3. Unité de contact selon la revendication 1 ou 2
**caractérisé en ce que**
le dispositif de direction (24, 36, 38, 48, 59) est muni d'une pluralité d'aimants (30, 39, 49, 60).

4. Unité de contact selon la revendication 3,
**caractérisé en ce que**
les aimants (30, 39, 49, 60) sont disposés à des intervalles réguliers le long d'une longueur du support de bande de frottement (21).

5. Unité de contact selon l'une quelconque des revendications précédentes,
**caractérisé en ce que**
l'aimant (30, 39, 49, 60) est un aimant permanent ou un électroaimant.

6. Unité de contact selon l'une quelconque des revendications précédentes,
**caractérisé en ce que**
l'aimant (30, 39, 49, 60) est un barreau aimanté.

7. Unité de contact selon l'une quelconque des revendications précédentes,
**caractérisé en ce que**
l'aimant (30, 39, 49, 60) est disposé dans le profil de support (23, 46, 56) et/ou à l'extérieur du profil de support.

8. Unité de contact selon l'une quelconque des revendications précédentes,
**caractérisé en ce que**
l'aimant (30, 39, 49, 60) est disposé sur un côté longitudinal (29) du profil de support (23, 46, 56) détourné du sens de la marche et/ou sur un côté longitudinal du profil de support (23, 46, 56) tourné vers le sens de la marche.

9. Unité de contact selon l'une quelconque des revendications précédentes,
**caractérisé en ce**
**qu'**un axe de symétrie (34) d'un champ magnétique (32, 41, 61) de l'aimant (30, 39, 49, 60) s'étend à travers le côté longitudinal (29) ou à travers la bande de frottement (22, 45, 55).

10. Unité de contact selon l'une quelconque des revendications 1 à 6,
**caractérisé en ce que**
le dispositif de direction (48) a un profil de retenue (50) qui s'étend le long d'un profil de support (46) du support de bande de frottement et sur lequel l'aimant (49) est disposé, le profil de retenue étant relié de manière détachable avec le profil de support, un arc électrique (25) pouvant être dévié du profil de support et du profil de retenue et dirigé vers la bande de frottement (45) ou éteint au moyen de l'aimant.

11. Unité de contact selon l'une quelconque des revendications précédentes,
**caractérisé en ce que**
l'aimant (30, 39, 49, 60) est adjacent à un bord supérieur (42, 62) du profil de support (23, 46, 56).

12. Unité de contact selon l'une quelconque des revendications 1 à 6,
**caractérisé en ce que**
le dispositif de direction a un profil de retenue qui s'étend parallèlement à un profil de support (23, 46, 56) du support de bande de frottement (21) et sur lequel l'aimant (30, 39, 49, 60) est disposé, le profil de retenue étant disposé sur le support de bande de frottement à un distance par rapport au profil de support, un arc électrique (25) pouvant être dévié du profil de support et dévié vers la bande de frottement (22, 45, 55) ou éteint au moyen de l'aimant.

13. Unité de contact selon l'une quelconque des revendications 1 à 6,
**caractérisé en ce que**
l'unité de contact comprend un dispositif de positionnement destiné à supporter et positionner le dispositif de contact glissant (19, 35, 37, 43, 44, 54) sur une caténaire (20), le dispositif de positionnement ayant le dispositif de direction (24, 36, 38, 48, 59), l'aimant (30, 39, 49, 60) étant disposé sur une partie du dispositif de positionnement, ladite partie étant la partie du dispositif de positionnement qui est la plus proche de la caténaire par rapport à la caténaire quand le dispositif de positionnement est dans une position de contact dans laquelle la bande de frottement est en contact avec la caténaire (20), un arc électrique (25) pouvant être dévié de ladite partie et dirigé vers la bande de frottement ou éteint au moyen de l'aimant.

14. Unité de contact selon la revendication 12 ou 13,
**caractérisé en ce que**
le dispositif de contact glissant (19, 35, 37, 43, 44, 54) et le dispositif de positionnement ont chacun un dispositif de direction (24, 36, 38, 48, 59).

15. Procédé de direction d'arcs électriques (25) sur une unité de contact, notamment pour alimenter des véhicules en courant par une caténaire (20), un support de bande de frottement (21) qui a une bande de frottement (22, 45, 55) d'un dispositif de contact glissant (19, 35, 37, 43, 44, 54) de l'unité de contact disposée sur celui-ci étant mis en contact avec une caténaire au moyen d'un dispositif de positionnement de l'unité de contact, un arc électrique étant formé entre la caténaire et la bande de frottement, l'arc électrique étant éteint ou dirigé vers la bande de frottement au moyen d'un dispositif de direction (24, 36, 38, 48, 59) de l'unité de contact qui est muni d'un aimant (30, 39, 49, 60) et entrant en contact avec la bande de frottement,
**caractérisé en ce que**
l'aimant est disposé sur un profil de support (23, 46, 56) du support de bande de frottement, un arc électrique pouvant être dévié du profil de support et dirigé vers la bande de frottement ou éteint au moyen de l'aimant.

16. Utilisation d'un aimant (30, 39, 49, 60) pour diriger ou éteindre des arcs électriques (25) sur une unité de contact, notamment pour alimenter des véhicules en courant par une caténaire (20), l'unité de contact comprenant un dispositif de contact glissant (19, 35, 37, 43, 44, 54) qui a un support de bande de frottement (21) et une bande de frottement (22, 45, 55) disposée sur celui-ci et un dispositif de positionnement destiné à supporter et positionner le dispositif de contact glissant, l'aimant formant un dispositif de direction (24, 36, 38, 48, 59) pour des arcs électriques et étant disposé sur l'unité de contact,
**caractérisée en ce que**
l'aimant est disposé sur un profil de support (23, 46, 56) du support de bande de frottement, un arc électrique pouvant être dévié du profil de support et dirigé vers la bande de frottement ou éteint au moyen de l'aimant.
